# EUROPEAN PATENT SPECIFICATION

(11) **EP 0 498 813 B1**
(45) Date of publication and mention of the grant of the patent: **28.12.1994**
(21) Application number: 90915453.6
(22) Date of filing: 27.10.1990
(51) Int. Cl.: H04N 5/68, H04N 9/64

(54) **CIRCUIT FOR THE CUT OFF REGULATION IN A TELEVISION RECEIVER**
SCHALTUNG ZUR SPERRSPANNUNGSREGELUNG IN EINEM FERNSEHEMPFÄNGER
CIRCUIT DE REGULATION DE COUPURE DANS UN RECEPTEUR DE TELEVISION

(30) Priority: 03.11.1989 DE 3936584
(43) Date of publication of application: 19.08.1992
(73) Proprietor: Deutsche Thomson-Brandt GmbH, 78003 Villingen-Schwenningen (DE)
(72) Inventor: SOWIG, Helmut, D-7730 Villingen (DE); VIZER, David, Michael, D-7730 Villingen-Schwenningen (DE)
(74) Representative: Einsel, Robert, Dipl.-Ing.
(86) International application number: EP9001923
(87) International publication number: WO9107051

(56) References cited:
- EP-A- 0 309 726
- US-A- 4 340 904
- US-A- 4 450 476
- RESEARCH DISCLOSURE, no. 285, January 1988, (New York, NY, US), "Automatic non-optical beam current balance for multiple beam cathode ray tube", page 55
- PATENT ABSTRACTS OF JAPAN, vol. 11, no. 212 (E-522)(2659), 9 July 1987 & JP, A, 6234489 (HITACHI LTD), 14 February 1987
- IBM Technical Disclosure Bulletin, vol. 29, no. 9, February 1987, IBM Corp., (Armonk, NY, US), "Automatic CRT heater control", pages 3896-3898

## Description

The invention is based on a circuit for the blanking beam current regulation in a television receiver according to the preamble of claim 1. Such regulation is also generally referred to as cutoff regulation.

In a television receiver, during empty lines of the vertical blanking interval reference signals for a picture half-tone (gray scale value) are inserted. By evaluating the hereby generated beam currents for R, G, B, corrective variables for the correction of the beam current are gained. These reference signals are not visible on the screen because the electron-beam is located outside the picture field during the above-mentioned lines.

If, for example, a picture with an aspect ratio of 16:9 is written on to a screen with an aspect ratio of 4:3, then black bands are created at the upper and lower picture edges. Consequently, the electron-beam which writes the actual picture with the aspect ratio 16:9 is, with the reference signal, in fact outside the written picture but within the screen during the above-named lines. This leads to the reference signal above the actual picture becoming visible within the bands that are black in principle.

It is conceivable to alter the vertical deflection in such a way that the electron-beam is located outside the screen to begin with and then at the start of the actual picture, deflected discontinuously to the corresponding position to start the picture. However, such an alteration of the vertical deflection is, considering the circuitry required, technically too difficult and not practicable.

It is the object of the invention to modify the circuit for the cut off current regulation so that the reference signals do not become visible on the screen without impairing the function of the circuit and without changing the vertical deflection.

This task is solved by the invention given in claim 1. Advantageous further developments of the invention are stated in the subclaims.

In "Research Disclosure", no 28577, page 55, January 1988 a method for beam current cut off regulation of the picture tube is described wherein the beam is driven off the nominal path in order to strike a sense element whereby a suitable drive signal is then applied to the test beam so that the beam current characteristic can be determined. There is no measurement by comparing the voltage drop at a measuring resistors fed by the beam current due to a reference signal and comparing it with said reference signal. Furthermore there is no hint to detection of special seldom events and providing the reference signal once momentarily only a short time after said events.

US-A-4 450 476 shows an automatic kinescope bias (AKB) control system for a television receiver wherein unwanted transient effects caused by KAB action before the kinescope electrons reach normal operating temperature are prevented by delaying the initial operation of the AKB system for a time sufficient to allow the electron guns to reach proper operating temperature.

EP-A 0 309 726 shows a circuit for inserting tests lines for automatic adjusting the beam currents within a cathode ray tube. In order to reduce the visibility of the test lines in case the vertical deflection amplitude is reduced said test lines are inserted during the visible picture forward period always during the first line of successive fields. The test lines are inserted in dependence from a fixed minimal value of the mean beam current of the picture tube.

The invention is based on the following consideration. The named measurement of the beam current with a defined reference signal is in fact necessary in order to tune-in the blocking point of the picture tube so that the beginning of the beam current occurs at the black level of the video signal. However, a permanent repeated measurement, for example, with vertical frequency, is not necessary for that. Rather, it is sufficient if this measurement happens once momentarily because this value only changes over a very long time. Consequently, it is enough if the measurement happens only once during a short time directly after switching on the television reciever or as the receiver is switched off or at various points in time which occur only rarely, and the corrective variable for the correction of the blocking point is stored in a non-transient memory. This correction variable can then be used unaltered over a long period of days, weeks or months without renewed measurement. Consequently, a measuring process whose result is then stored for whatever length of time is desired happens only relatively seldom when compared to the entire operating time of the television receiver, for example, always after switching on or upon switching off. The measuring process need not be carried out at the beginning of every switching on. It is also possible to carry out the measuring process for gaining the correction variable only very rarely, for example, at an interval of several days or purely at random.

During most of the time the television receiver is operating, the reference signal which is disturbing during reproduction does not need to be inserted into the video signal so that the afore-mentioned interference on the screen caused by this signal is avoided.

Subsequently, an embodiment example is used to illustrate the invention by means of the drawing. Therein is shown:
- Fig. 1: an example of a circuit for the invention,
- Fig. 2: curves for illustrating the mode of effect of the circuit according to Fig. 1, and
- Fig. 3: the course of the curves for illustrating the mode of effect of a further development of the invention shown in Fig. 1.

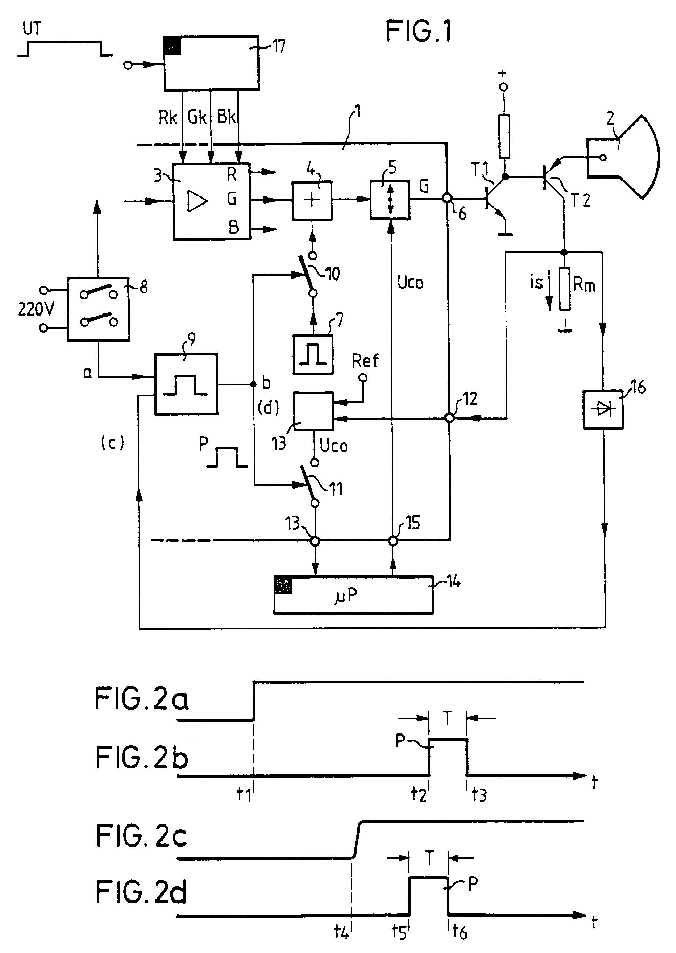

Fig. 1 shows the video processor 1 which supplies the R, G, B control signals for the picture tube 2. For simplicity, only the circuit for color signal G is shown but a circuit is also provided for the two other color signals R, B in corresponding manner. The color signal G is sent from the amplifier 3 via the adding stage 4 to the circuit 5. In the circuit 5, the direct voltage position of the signal and therewith the beam current for a particular signal value can be adjusted by an applied control voltage Uco. The signal regulated in this way is sent via the output 6, the video final stage transistor T1 and the measuring transistor T2 to the cathode of the picture tube 2. The beam current 'is' from the picture tube 2 flows through the measuring resistor Rm.

The circuit for gaining the control voltage Uco is described in the following. Uco has the effect that the beam current 'is' for a predetermined value of the signal G, for example the black level or a defined value between black and white, has a certain value predetermined by a reference voltage. In particular, it should thereby be ascertained that the beam current, with the black value, lies on the beam current starting point. This regulation is also referred to as cutoff regulation.

A test line generator 7 is provided for this regulation which generates reference control signals for the signals R, G, B successively in defined lines during the vertical blanking interval. Directly after switching on the television receiver with the mains switch 8, a voltage according to Fig. 2a is created at the output of the mains switch 8, and this is sent to the impulse generator 9. After a delay from t1 to t2, the generator 9 creates, at time t2, a keying impulse P with the duration T. The time from t1 to t2 is of such a length that the beam current 'is' has reached its definitive value. The pulse P closes the switch 10 which consequently feeds the reference control signals created in the generator 7 to the adding stage 4, where they are added to the color signal G. Based on these reference control signals, a voltage, which is proportional to the beam current 'is' generated by the reference control signal, ensues at the measuring resistor Rm. This voltage is sent via the input 12 of the video processor 1 to the comparator circuit 13 in which it is compared to a reference voltage Ref. A control voltage Uco is gained from the comparison which represents the deviation of the beam current 'is' for the respective actual reference control signal. This voltage Uco is sent via the switch 11, also closed by the pulse P, and the output 13 of the video processor 1 to the memory 14 which is preferably provided as a microprocessor. The voltage Uco and the corresponding voltages for the two other color signals R, B are stored in the memory 14. This measurement for gaining Uco is finished at time t3, and the switches 10, 11 are opened again. The voltage Uco stored in the memory 14 is fed via the input 15 to the circuit 5 and there causes the shifting of the direct voltage position of the color signal in such a manner that a certain voltage value of this signal generates the correct associated beam current 'is'. The voltage Uco is, in practice, only a slowly changing voltage because it essentially only serves to balance alterations of the beam current based on aging and long term tolerances.

After switching on the television receiver, the voltage Uco is always generated anew, deposited in the memory 14 instead of the voltage Uco existing up to that time and fed to the circuit 5 for the reproduction which is to follow. So, the actual measuring process during the pulse P only happens during a very short period of a few ms. During almost the entire operating time of the television receiver, Uco is not determined by measurement but taken from the memory 14 as a stored value. During this time, the reference control signal can no longer become visible on the screen, not even if the lines of the vertical blanking interval lie within the visible picture area, because it is disconnected from the adding stage by means of the switch 10.

According to an alternative for the initiation of the short-time measurement of the beam current, the beam current 'is' is evaluated in the beam current detector 16. The detector 16 supplies a voltage according to Fig. 2c which represents the beginning of the beam current. According to Fig. 2c, the start of the beam current occurs at time t4. After a short time from t4 to t5 of a few seconds, the pulse P is again generated in circuit 9. This again operates the switches 10, 11 in the manner described for the initiation of the measuring process for generating Uco. The time from t4 to t5 is to make sure that the beam current has reached its definitive value after its start at time t4. The impulses P according to Fig. 2b and Fig. 2d can have the same position in time.

The two alternative criteria for the initiation of the measuring process, one being the switching on of the television receiver and the other being the start of the beam current, can also be evaluated in the additive sense of an AND-function. The circuit would then be designed so that the pulse P is then always generated when the television receiver is switched on, the voltage according to Fig. 2a is present and the beginning of the beam current based on the voltage according to Fig. c has been sensed. Preferably, a filter section which effects an integration of the voltage gained over several fields is located behind the circuit 16.

If the lines of the vertical blanking time, in which the reference control signals are generally located, lie within the visible picture area, then the reference control signals are momentarily visible on the screen. This is, to begin with, unavoidable because firstly, a beam current must flow for the gaining of Uco and the beam current necessarily causes a brightening of the picture. However, this visibility on the screen is so brief and moreover, lies within the switch-on phase of the receiver so that it does not appear disturbing.

The residual visibility of the reference control signals can be eliminated by the following measures. Let it be assumed that the television receiver basically works with a vertical deflection and a picture tube with the aspect ratio of 4:3 and the test lines do consequently not become visible on the visible picture area. Now, if a signal with an aspect ratio of 16:9 is received and this is displayed on a picture tube with aspect ration 4:3, then the test lines become necessarily visible above the actual picture. Therefore, upon reception of a signal with aspect ratio 16:9, the amplitude of the vertical deflection at first remains in the attitude for the aspect ratio 4:3. The electron-beam is then located outside the visible picture area and is not visible during the vertical blanking interval. The described measuring process for gaining Uco takes place in this condition so that the electron-beams then generated do not become visible on the screen. The changeover of the vertical deflection to the 16:9 format occurs only after the conclusion of the measuring process, i.e. after the times t3, t6 in Fig. 2. The electron-beam is now located on the visible screen area even outside the actual picture area during the vertical blanking time. However, because the measuring process has been finished and the reference control signals are no longer applied to the adding stage 4, no disturbing brightening of the screen takes place.

Owing to the overlarge vertical deflection amplitude with these measures a considerable geometric distortion would result. A circle would then be deformed into a vertically standing oval. In order to avoid such a geometrically distorted picture, it is practical to blank the picture contents during this time.

If the measurement always happens in the described manner upon switching on the television receiver, correction values are determined for the cold picture tube. These values are generally no longer valid for the warm picture tube in the stationary condition. The correction values for the white balance measured in the cold condition would then no longer have the optimum values in the warm stationary operating condition of the receiver. Therefore, it can be practical to not carry out the described measurement upon switching on but, rather, when the picture tube has reached its definitive operating temperature. For example, the measurement always occurs upon switching off the receiver, during transition to the standby mode, with each new channel selection or also automatically in larger time intervals.

Another possibility consists of always carrying out a measurement if the full height of the screen is written on with a visible picture, consequently, the electron-beam is located outside the visible screen area during the measurement periods. For example, it can be automatically recognized in a television receiver whether a first operating mode with 4:3 picture reproduction and a full height image or a second operating mode with 16:9 reproduction and reduced picture height is present. A detector is preferably then provided which recognizes the first operating mode and then triggers a periodic mesurement always during the vertical blanking time. That is possible because then the reference control signals do not become visible. The measurement results gained during this first operating mode are stored and are then available during the second operating mode in which measurement is no longer possible without interference on the screen. So the memory is then always updated during the first operating mode with 4:3 picture reproduction.

If the measurement happens in the warm condition of the picture tubes then the case can arise that the correction values during the heat-up phase of the picture tube, approximately 15 minutes after switching on, are not correct. In fact, the picture would then reproduce with the correct white balance at the operating temperature in the stationary operating condition. However, the white balance would be adulterated during the first 15 minutes. According to a further embodiment example, this disadvantage can be eliminated by the following measures. It is determined which correction values are required during the heat-up phase in the picture tube in order to secure the correct white balance during this time also. These correction values are stored in a memory and fed to the picture tube during the heat-up phase. The correction values then eliminate the apparent deviations in brightness of the three colors R, G, B on the picture tube during the heat-up phase.

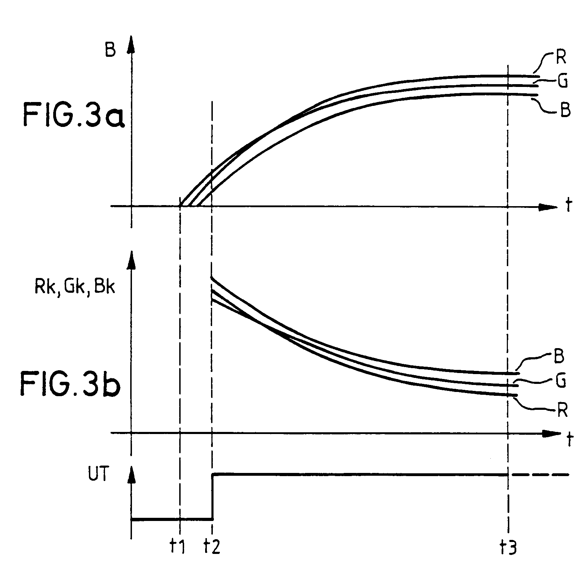

This solution is illustrated by means of Fig. 3. The television receiver is switched on at time t1. Fig. 3a shows the course of brightness of the colors R, G, B displayed on the screen. It can be seen that the picture tube shows a deviation in the brightness during this heat-up phase. For example, in Fig. 3a red is too light and blue too dark during the second half of the heat-up phase.

Correction values according to Fig. 3b are now stored in a memory which become active from time t2 after a brief blanking time for the picture tube. The course of these correction values Rk, Gk, Bk is the inverse of those according to the curves in Fig. 3a and eliminate the deviation in the curves according to Fig. 3a. For example, according to Fig. 3a, the reproduction of R is too light at time t3. Hence, the correction voltage Rk according to Fig. 3b is correspondingly lowered and so compensates the increased brightness according to Fig. 3a. The shown deviations in the brightness courses for R, G, B according to Fig. 3a are consequently compensated by the corresponding control voltages Rk, Gk, Bk according to Fig. 3b applied at the picture tubes during the heat-up phase of the picture tubes.

In Fig. 1, the values Rk, Gk, Bk are already deposited in the memory 17 with the manufacture. The memory 17 is preferably constructed as a programmable constant value storage in the form of an EPROM or ROM. The memory 17 is activated during the heat-up phase by the keying impulse UT. It then delivers the correction values Rk, Gk, Bk. These are added to the signals R, G, B in the amplifier in such a way that the compensation according to Fig. 3 is caused at the picture tube.

## Claims

1. Circuit for the cut-off current regulation of the picture tube (2) in a television receiver wherein during a blanking line a reference control signal (generator 7) is fed to the picture tube (2) and the voltage drop at a measuring resistor (Rm) fed by the beam current (is) due to said reference signal is fed together with a reference value (Ref) to a comparator (13) generating a corrective variable (Uco) fed to a video amplifier (5) controlling the picture tube (2) for correction of the associated beam current, **characterized in that** a detecting circuit is provided detecting special seldom events like receiver switch on, receiver switch off, each new channel selection or transition to standby mode and providing the reference signal once momentarily after detection of such an event for a period being short in comparison to the operating time of the receiver and storing the associated variable in a non-transient memory (14) the output of said memory further being used unaltered for correction of beam current all the long period outside the short periods of said events.

2. Circuit according to claim 1, **characterized in that** the measuring process then takes place when the picture tube (2) has reached its stationary operating temperature.

3. Circuit according to claim 2, **characterized in that** during the time in which the picture tube (2) gradually changes from the cold condition to the stationary warm condition, correction values (Rk, Gk, Bk) for the beam current deposited in a memory (17) are applied to the control electrodes of the picture tube (2).

4. Circuit according to claim 1, **characterized in that** the measuring process always only happens in one operating mode in which the electron-beam during the reference signal is located outside the visible screen area.

5. Circuit according to claim 4, **characterized in that** a switching-over to another vertical deflection amplitude, with which lines of the vertical blanking interval lie on the visible picture area, takes place only after the measuring process has been finished and the reference signal has been switched off.

## Patentansprüche

1. Schaltung zur Regelung des Austaststromes der Bildröhre (2) in einem Fernsehempfänger, in der während einer Austastzeile ein Referenzsteuersignal (Generator 7) einer Bildröhre (2) zugeleitet wird und der Spannungsabfall an einem vom auf diesem Referenzsignal beruhenden Strahlstrom (is) gespeisten Meßwiderstand (Rm) zusammen mit einer Referenzgröße (Ref) einem Vergleicher (13) zugeführt wird, der eine Korrekturgröße (Uco) erzeugt, die einem Videoverstärker (5) zugeleitet wird, der die Bildröhre (2) zur Korrektur des zugehörigen Strahlstromes steuert, dadurch gekennzeichnet, daß eine Detektorschaltung vorgesehen ist, die gewisse seltene Ereignisse wie Einschalten des Empfängers, Ausschalten des Empfängers, jede neue Kanalwahl oder Übergang zum Bereitschaftsmodus feststellt und nach Feststellung eines derartigen Ereignisses einmal kurz das Referenzsignal für einen Zeitraum erzeugt, der im Vergleich zur Betriebszeit des Empfängers kurz ist, und die entsprechende Größe in einem nichtflüchtigen Speicher (14) speichert, wobei die Ausgangsgröße des Speichers außerdem unverändert zur Korrektur des Strahlstromes während der gesamten langen Zeit außerhalb der kurzen Zeiten der genannten Ereignisse verwendet wird.

2. Schaltung nach Patentanspruch 1, dadurch gekennzeichnet, daß der Meßvorgang stattfindet, wenn die Bildröhre (2) ihre stationäre Betriebstemperatur erreicht hat.

3. Schaltung nach Patentanspruch 2, dadurch gekennzeichnet, daß während der Zeit, in der die Bildröhre (2) nach und nach vom kalten Zustand zum stationären warmen Zustand übergeht, Korrekturgrößen (Rk, Gk, Bk) für den Strahlstrom an die Steuerelektroden der Bildröhre (2) angelegt werden, die in einem Speicher (17) gespeichert sind.

4. Schaltung nach Patentanspruch 1, dadurch gekennzeichnet, daß der Meßvorgang immer nur in einer Betriebsart stattfindet, in der der Elektronenstrahl während des Referenzsignales außerhalb des sichtbaren Bildschirmbereiches liegt.

5. Schaltung nach Patentanspruch 4, dadurch gekennzeichnet, daß ein Übergang zu einer anderen Vertikalablenkamplitude, bei der Zeilen der Vertikalaustastlücke im sichtbaren Bildbereich liegen, erst nach Beenden des Meßvorganges und Abschalten des Referenzsignales stattfinden.

## Revendications

1. Circuit pour le réglage du courant de suppression du tube image (2) dans un récepteur de télévision dans lequel, pendant une ligne de suppression, un signal de commande de référence (générateur 7) est amené au tube image (2) et la chute de temps à une résistance de mesure (Rm) amenée par le courant de faisceau (is) dû au signal de référence mentionné est amené avec une valeur de référence (Ref) à un comparateur (13) qui génère une variable de correction (Uco) amenée à un amplificateur vidéo (5) qui commande le tube image (2) pour corriger le courant de faisceau associé, **caractérisé en ce** qu'un circuit de détection est prévu qui détecte les événements rares spéciaux comme la mise en circuit du récepteur, la mise hors circuit du récepteur, chaque nouvelle sélection de canal ou transition au mode d'attente et qui donne le signal de référence une fois momentanément après la détection d'un tel événement pour une période qui est courte en comparaison avec le temps de fonctionnement du récepteur et qui met en mémoire la variable associée dans une mémoire rémanente (14), la grandeur de sortie de cette mémoire étant en outre utilisée sans être changée pour corriger le courant de faisceau pendant toute la longue période en dehors des courtes périodes des événements cités.

2. Circuit selon la revendication 1, **caractérisé en ce** que le processus de mesure a ensuite lieu lorsque le tube image (2) a atteint sa température de fonctionnement stationnaire.

3. Circuit selon la revendication 2, **caractérisé en ce** que, pendant le temps pendant lequel le tube image (2) change graduellement de l'état froid à l'état chaud stationnaire, des valeurs de correction (Rk, Gk, Bk) pour le courant de faisceau déposées dans une mémoire (17) sont appliquées aux électrodes de commande du tube image (2).

4. Circuit selon la revendication 1, **caractérisé en ce** que le processus de mesure a toujours lieu seulement dans un mode de fonctionnement dans lequel le faisceau électronique pendant le signal de référence est situé en dehors de la zone de l'écran visible.

5. Circuit selon la revendication 4, **caractérisé en ce** qu'un passage à une autre amplitude de déviation verticale avec laquelle des lignes de l'intervalle de suppression trames se trouvent dans la zone d'image visible a lieu seulement après que le processus de mesure soit terminé et que le signal de référence ait été mis hors circuit.
